(19) Europäisches Patentamt / European Patent Office / Office européen des brevets

(11) **EP 3 211 445 B1**

(12) **EUROPEAN PATENT SPECIFICATION**

(45) Date of publication and mention
of the grant of the patent:
**12.06.2019 Bulletin 2019/24**

(51) Int Cl.:
*G01S 7/35* *(2006.01)*     *G01S 13/34* *(2006.01)*
*G01S 13/42* *(2006.01)*     *G01S 13/93* *(2006.01)*

(21) Application number: **16157898.4**

(22) Date of filing: **29.02.2016**

(54) **RADAR SYSTEM**

RADARSYSTEM

SYSTÈME RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2017 Bulletin 2017/35**

(73) Proprietor: **NXP B.V.
5656 AG Eindhoven (NL)**

(72) Inventor: **ZIVKOVIC, Zoran
5656 AG Eindhoven (NL)**

(74) Representative: **Bradler, Carola Romana
NXP Semiconductors Germany GmbH
Intellectual Property Group
Troplowitzstraße 20
22529 Hamburg (DE)**

(56) References cited:
**US-A1- 2007 152 871     US-A1- 2009 222 226
US-A1- 2014 247 181     US-A1- 2015 055 688**

## Description

FIELD

This disclosure relates to a radar system for a vehicle.

BACKGROUND

In a radar system, multiple transmit antennas may be used to increase radar angular resolution. Properly placed transmit antennas create a similar effect as having more receive antennas by creating so called "virtual antennas". Those systems are usually denoted as Multiple Input Multiple Output (MIMO) systems. The antennas are operated in sequence during transmission and the receiver processes the sequential transmission to determine the range and angle of arrival of a reflected signal. MIMO radar systems may be used for example in cars or other motor vehicle as part of an adaptive driver assistance system. Such a car radar system may typically be a frequency-modulated continuous-wave (FMCW) radar system which uses a linear frequency modulated sweep signal in transmission. The transmitted signal is typically mixed with the received reflected signal which results in a beat frequency. The beat frequency indicates the distance between the radar system and an object.

US 2014/0247181A1 describes a Radar apparatus and method. US 2009/222226A1 describes a Method and Apparatus for On-Line Compressed Sensing. US 2015/055688A1 describes signal processing, data encoding and/or decoding techniques applied in a dictionary system. US 2007/152871 A1 describes Time duplex apparatus and method for radar sensor front-ends.

SUMMARY

Various aspects are defined in the accompanying claims. In a first aspect of the invention there is defined a radar system for a motor vehicle comprising a plurality of transmitters for transmitting a radar signal comprising a continuous wave signal, a receiver for receiving the transmitted radar signal reflected by an object, a signal re-constructor coupled to the receiver, wherein each transmitter is configured to transmit at least part of the continuous wave signal during a time period and wherein for each of a number of sample time periods during the time period combinations of at least some of the transmitters transmit, and the signal re-constructor is configured to determine the coordinates of an object with respect to the radar system from a number of measurements of the received continuous wave signal equal to the number of sample time periods, a signal generator coupled to the plurality of transmitters, the signal generator being configured to generate a continuous wave signal comprising a frequency modulated continuous wave chirp signal which repeats after the time period, a controller coupled to each of the transmitters wherein the transmit controller is operable to route the continuous wave signal to at least one of the transmitters during each of the sample time periods and to control the sequence of combinations of transmitters used to transmit during the time period T in at least one of a pseudo-random sequence or Gold-code sequence.

By using a pseudo random sequence or Gold-code sequence the combined transmit signal may be generated as a spread spectrum signal.

In embodiments the received radar signal is processed by the signal re-constructor as a sparse signal.

In one or more embodiments, the signal re-constructor may be configured to generate an estimate of the expected signal value of the received signal for each of a plurality of distances between an object and the radar system and an angle of arrival of the received signal and to compare the measured signal value with the expected signal value for each combination of the distances and angles of arrival.

In one or more embodiments the signal re-constructor may be configured to determine the most likely location of an object by determining a minimum difference between the expected value and the received signal value for each combination of the distance and angle of arrival.

In one or more embodiments the radar system may include an antenna switch module coupled to the controller wherein the controller is operable to couple an antenna to the receiver when not in use by a transmitter.

Embodiments of the radar system may be incorporated into an automatic driver assistance system.

Embodiments of the radar system may be formed as an integrated circuit.

In a second aspect of the invention there is described, a method of determining the coordinates of an object in a radar system comprising a plurality of transmitters and a receiver, the method comprising transmitting at least part of a continuous wave signal during a time period by varying the combinations of the transmitters used to transmit the signal a number of sample times during the time period, receiving the transmitted frequency modulated continuous wave signal reflected from an object, and determining a distance and angle of the object with respect to the radar system from a number of measurements equal to the number of sample times wherein the method further comprises: generating a continuous wave signal comprising a frequency modulated continuous wave chirp signal which repeats after the time period (T), routing the continuous wave signal to at least one of the transmitters during each of the (N) sample time periods, and varying the combinations of transmitters used to transmit during the time period (T) in at least one of a pseudo-random sequence, and a Gold code sequence.

In one or more embodiments the continuous wave signal comprises a frequency modulated continuous wave chirp signal having a duration equal to or less than the time period.

In one or more embodiments determining the distance and angle of the object further comprises summing values of the received signal strength for each element of a matrix, each matrix element representing a signal strength value for a particular angle of arrival value and range value.

In one or more embodiments determining the distance and angle of the object comprises assuming that the majority of elements in the matrix are zero.

In one or more embodiments wherein determining the distance and angle of an object further comprises generating an estimate of the expected signal value of the received signal reflected from an object over a combination of a range of distances and angles of arrival and comparing the measured signal value with the expected signal value for each combination of the distance and angles of arrival.

In a third aspect there is described a computer program product comprising instructions which, when being executed by a processing unit, cause said processing unit to perform a method of determining the coordinates of an object in a radar system comprising a plurality of transmitters and a receiver, the method comprising transmitting at least part of a frequency modulated continuous wave signal during a time period by varying the combinations of the transmitters used to transmit the signal a number of sample times during the time period, receiving the transmitted frequency modulated continuous wave signal reflected from an object, and determining a distance and angle of the object with respect to the radar system from a number of measurements equal to the number of sample times.

In the figures and description like reference numerals refer to like features. Embodiments of the invention are now described in detail, by way of example only, illustrated by the accompanying drawings in which:

Figure 1 describes a radar system for a motor vehicle according to an embodiment.

Figure 2 illustrates a) an example chirp signal characteristic b) a periodic chirp signal characteristic c) a radar system with respect to an object to be detected and a matrix of range and angle of arrival, and d) an example transmit combination and receiver sampling timeline.

Figure 3 describes a radar system according to an embodiment.

Figure 4 illustrates a) a typical radar transmission for a MIMO radar system b) a radar transmission according to an embodiment.

Figure 5 shows a) object detection results for a MIMO radar system according to an embodiment and b) object detection results for a typical MIMO radar system.

Figure 6 illustrates a radar system according to an embodiment.

Figure 7 illustrates a radar system according to an embodiment.

Figure 8 shows a method of detecting an object in a radar system for a motor vehicle according to an embodiment.

DESCRIPTION

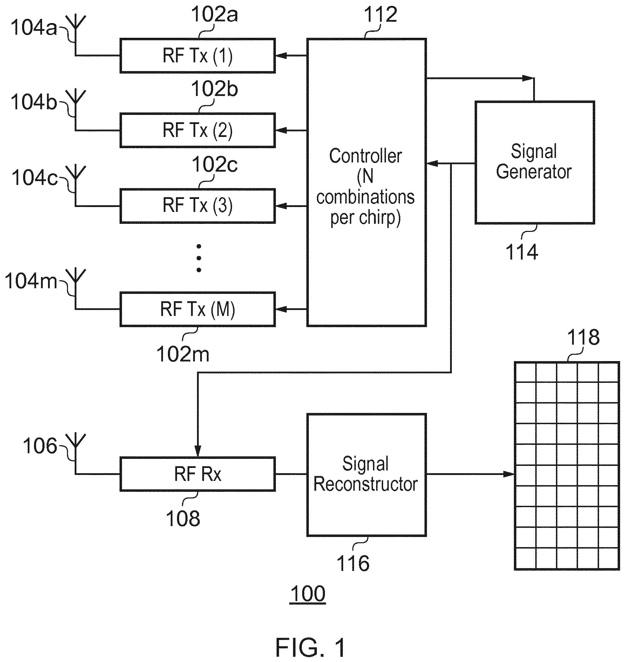

Figure 1 describes a radar system 100 according to an embodiment. Radar system 100 includes a number M of radio frequency (RF) transmitters 102a, 102b, 102c, 102m connected to corresponding antenna 104a, 104b, 104c, 104m. A controller 112 has a control output connected to each of the respective RF transmitters 102a to 102m and a further control output connected to a signal generator 114. The signal generator 114 has an output connected to the controller. The radar system 100 has a receiver chain consisting of an antenna 106 connected to a RF receiver 108. The output of the RF receiver is connected to a signal re-constructor 116. An output of the signal re-constructor 116 is connected to a memory 118. An output of the signal generator 114 is connected to the RF receiver 108.

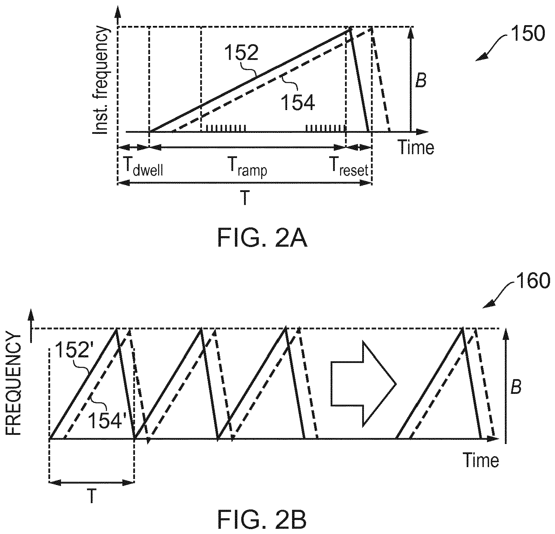

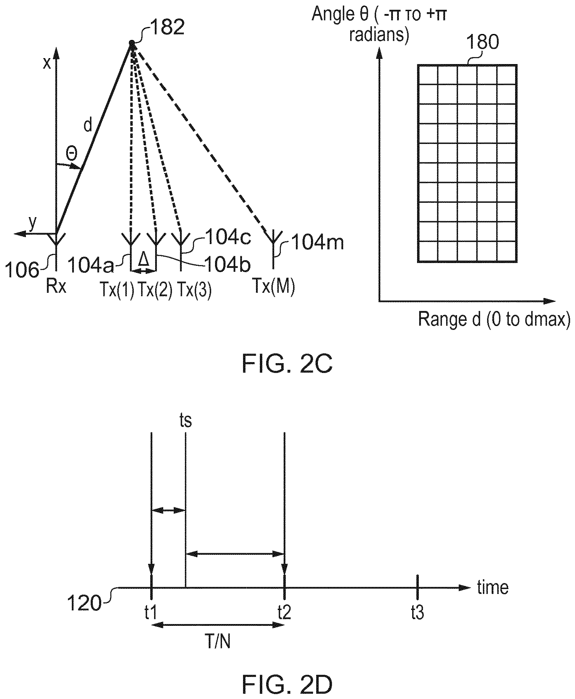

The operation of the radar system 100 is now described with reference to figure 1 and figure 2. In operation, the signal generator 114 generates a signal waveform to be at least partially transmitted by one or more of the RF transmitters 102a to 102m. In a radar system such as a FMCW radar, the signal generated is typically a linear frequency sweep referred to as an example of a chirp signal. The characteristics of the chirp signal are shown in figure 2A which shows a graph 150 of a chirp signal frequency variation on the y-axis with period T which may consist of an initial time period denoted $T_{dwell}$ corresponding to a period before the frequency ramp starts, a period $T_{ramp}$ corresponding to the linearly increasing frequency ramp of the chirp signal and a time period $T_{reset}$ during which the frequency is reset to the minimum frequency value. The frequency range of the ramp corresponds to a bandwidth B of the chirp signal. A time delayed version of the chirp signal illustrated by line 154 may be received by the RF receiver 108 when reflected from an object. The chirp signal may repeat with time period T as illustrated in figure 2B by graph 160 for transmitted chirp signal 152' and received chirp signal 154'. The general operation of a radar signal model is shown in figure 2C. Let an object be at distance d and at angle $\theta$ with respect to the radar system as shown in Figure 2C the radar signal travels at speed of light c and when reflected from the object, it is received with a delay of *2d/c*. Multiple transmit antennas 104a, 104b, 104c, 104m will introduce additional signal delays between the signals transmitted by the different antennas due to the different physical locations of the antennas. These additional delays will depend on the angle from which the signal is arriving $\theta$ and can be used to extract the information about the angular position of the object 182. As will be appreciated more than one object may be detected by the radar system 100.

The elements of matrix 180 may have elements corresponding to the different possible values of angle of arrival $\theta$ shown on the y axis of the matrix 180 which may vary between $-\pi$ τo $+\pi$ radians. The x axis of the matrix corresponds to the range *d* which may be determined from the phase difference between the transmitted signal and received signal which may vary between 0 and a maximum value $d_{max}$ dependent on the power of the respective transmitters 104a ... 104m.

Returning now to Figure 1, the controller 112 couples the generated signal to different combinations of the transmitters 104a to 104m during the time period T of the chirp signal. The reflected signal is processed by the signal re-constructor 116 by comparing the measured incoming samples with a model of the expected response for varying values of range and angles of incidence represented by the two dimensional matrix 180 which may be stored in the memory 118. The inventor of the present disclosure has realized that the angular resolution may be determined in a single chirp time period T by transmitting the signal using combinations of antennas and then reconstructing the signal assuming that most of the elements of the two dimensional matrix 180 will be zero. This allows the location of an object with the same angular resolution to be determined much faster than would otherwise by the case since conventionally multiple chirp signals, each signal having period T are transmitted sequentially through each antenna in turn.

In case of FMCW radar the transmitted signal is typically a linear chirp that consists of a linear frequency ramp of bandwidth B occurring during period $T_{ramp}$ as explained previously with reference to figure 2B. It will be appreciated that the received signal from m-th antenna can be approximated by:

$$x_{mn}^{pointmodel}(a,d,\theta,t) = ae^{j\omega(d)t}e^{j\tau(\theta,m)} \qquad (1)$$

Where *a* is the complex number with magnitude describing the strength of the received reflected signal and:

$$\omega(d) = 2\pi\frac{2d}{c}\frac{B}{T_{ramp}} \qquad (2)$$

is the distance dependent frequency of the demodulated signal. The delay $\tau(\theta, m)$ describes the relative delay of the m-th antenna with respect to some reference antenna m = 0. For two antennas at distance $\Delta$ from each other, the delay between the 2 signals can be approximated by $2\pi\frac{\Delta}{\lambda}\sin\theta$ _assuming that the object distance d is much larger than the distance between the antennas, usually the case in practice. For M uniformly spaced antennas $\tau(\theta, m) = 2\pi\frac{\Delta m}{\lambda}\sin\theta$ where $\lambda$ is the wavelength of the radar signal.

$$x_{mn}^{pointmodel}(a,d,\theta) = ae^{j2\pi\frac{2d}{c/B}\frac{n}{N}}e^{j2\pi\frac{\sin\theta}{\lambda/(M\Delta)}\frac{m}{M}} \qquad (3)$$

Where $x_{nm}$ denotes the n-th complex data sample during the transmission from the m-th antenna. In non-complex receivers the sample is equal to the real part of the equations. The radar signal does not reflect from a single point but from many points in space. We can define a set of distances di and angles $\theta_\kappa$ and approximate the received signal at antenna m as sum of reflections from all these possible points:

$$x_{mn}^{model}(A) = \sum_{l=0}^{N-1}\sum_{k=0}^{M-1} a_{kl}e^{j\omega_k m}e^{j\omega_l n} \qquad (4)$$

where each $\omega_k$ corresponds to an angle $\theta_\kappa$ and each $\omega_l$ corresponds to a distance $d_l$. The anti-alias filter is usually set according to the Nyquist sampling criteria to remove all frequencies above 1/(2T/N) Hertz. As a result the maximum distance that radar can estimate can be calculated from above as: N*c/(4B). The model depends on the unknown reflected signal strengths described by elements $a_{kl}$ of the matrix A.

Finding values of A that minimize the difference between the observed signals $x_{mn}$ and the model predicted signals $x_{mn}^{model}(A)$ is typical radar processing for detecting objects based on the radar signals. The sum of squared distances is minimized as measure of difference: E (A)

$$E(A) = \sum_{n=0}^{N-1} \sum_{m=0}^{M-1} (x_{mn} - x_{mn}^{model}(A))^2 \tag{5}$$

And

$$\hat{A} = argmin\left(E(A)\right) = argmin(\sum_{n=0}^{N-1} \sum_{m=0}^{M-1} (x_{mn} - x_{mn}^{model}(A))^2) \tag{6}$$

In case of a discrete set of distances and angles $\omega_k = \frac{2\pi k}{M}$, $\omega_l = \frac{2\pi l}{N}$, we have

$$x_{mn}^{model}(A) = \sum_{l=0}^{N-1} \sum_{k=0}^{M-1} x_{mn} e^{j\frac{2\pi mk}{M}} e^{j\frac{2\pi nl}{N}} \tag{7}$$

There is an efficient closed form solution for this problem, also known as 2-Dimensional Discrete Fourier Transform which may be implemented as a Fast Fourier transform:

$$\hat{a}_{kl} = \frac{1}{NM} \sum_{n=0}^{N-1} \sum_{m=0}^{M-1} x_{mn} e^{-j\frac{2\pi mk}{M}} e^{-j\frac{2\pi nl}{N}} \tag{8}$$

For the radar system 100, the controller 112 may combine all antenna signals into a single signal during a single chirp period T. The model for the combined signal is

$$x_n^{c,model}(A) = \sum_{m=0}^{M-1} c_{mn} \sum_{l=0}^{N-1} \sum_{k=0}^{M-1} a_{kl} e^{j\frac{2\pi mk}{M}} e^{j\frac{2\pi nl}{N}} \tag{9}$$

Where the $c_{mn}$ values are known gains used for each combination. The goal for minimization of the difference of the model to the data can be defined in the same way:

$$E^c(A) = \sum_{n=0}^{N-1} (x_n^c - x_n^{c,model}(A))^2 \tag{10}$$

And

$$\hat{A} = argmin\left(E^c(A)\right) = argmin(\sum_{n=0}^{N-1} (x_n^c - x_n^{c,model}(A))^2) \tag{11}$$

For the radar system 100 there are only N measurement samples $x_n^c$ whereas there are NM unknown $a_{kl}$ values in the matrix A. The problem is under-determined and as the consequence there will be many solutions with perfect model fit $x_n^c = x_n^{c,model}(A)$.

The inventor of the present application has realised that since most of the space is air which does not reflect the radar signals, most of the $a_{kl}$ values are expected to be zero. This can be taken into account and an alternative problem can be defined as determining from all values of A that satisfy $x_n^c = x_n^{c,model}(A)$, the value of A that has the minimal number of $a_{kl}$ different than zero. Finding a solution to this may allow all the relevant information to be extracted from the incomplete combined data.

This problem may be solved use a sparse approximation technique, for example by adding an initial term which captures the intuition that most $a_{kl}$ are expected to be zero as an additional regularization term

$$R^c(A) = \sum_{l=0}^{N-1} \sum_{k=0}^{M-1} |a_{kl}| \tag{12}$$

The minimization corresponding to the best fit between the measured results and the model is determined from

$$\hat{A} = argmin\left(E^c(A) + \lambda_R R^c(A)\right) \qquad (13)$$

Whereby $E^c(A)$ and $R^c(A)$ are determined from equations (12) and (13), and $\lambda_R$ is typically a constant value that is selected from a characterization of the particular implementation of the radar system 100. For example the parameter $\lambda_R$ may be chosen by cross validation. Various values of $\lambda_R$ are tried for various data and the one minimizing the cross-validated error is used. A value of zero corresponds to the original non determined problem. During testing some small value, for example 0.0001 is used initially and then increased until the error on testing with cross validation data starts increasing.

The signal re-constructor 116 may implement equations 9, 10, 11, 12, 13 which may allow the determination of the location of an object within a single chirp period with a similar angular resolution to that achieved using multiple transmissions. It will be appreciated that the signal re-constructor 116 may be implemented for example by software executable on a digital signal processor or other microprocessor and consequently the matrix processing described in the above equations may be implemented using software. Alternatively or in addition, some of the functions in the signal re-constructor 116 may be implemented using dedicated logic hardware.

By determining the location of an object within a single chirp period, the radar system 100 may determine the movement of an object with greater accuracy than using a sequential transmission of a chirp through each of the transmitting antennas. Figure 2D illustrates the timescale for transmitter combination changes with respect to the sample time of the reflected signal by the receiver. Timeline 120 shows the sample points at time t1, t2, and t3 spaced a time T/N apart where T is the chirp period time and N is the number of samples. For example T may be a value of 3 milliseconds and N may for example be a value of 1024 samples corresponding to a difference of t2 - t1 of 3 microseconds. At time t1 a transmitted combination may be changed to a combination $c_{mn}$ by the controller 112. At time t2 the transmitted combination may be changed to a combination $c_{mn+1}$ by the controller 112. After the transmission combination is changed, the previous combination signal reflections will still arrive for some period depending on the object distances. After some distance the signals will become too weak to detect. For example over a range of 100 meters the delay becomes 2* 100/c i.e. approximately 0.6 us. The corresponding sample $x_{mn}$ received by the receiver 108 should be taken at time $t_s$ in the period after the previous combination reflections have become too weak, which may for example be 0.6 microseconds. In some examples, the sample $x_{mn}$ may be taken at the same time as a new combination $c_{mn+1}$ is applied i.e. at time $t_2$, so $t_s = t_2$. This gives the maximum possible time for detection of valid signals transmitted from the previous transmitted combination $c_{mn}$. In some examples the controller may control both the time at which the transmitter combination changes and the receiver sampling time.

Although the analysis above applies to FMCW systems, it will be appreciated that in other examples, other continuous waves may be transmitted provided that the duration of the transmitted continuous wave is longer than the time of flight of the signal between the radar system and the object to be detected.

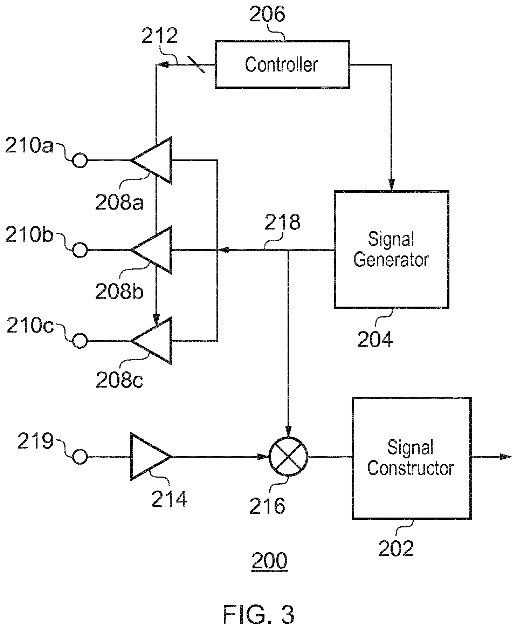

Figure 3 shows an example of a radar system 200 having 3 transmitters and 1 receiver. A signal generator 204 which may for example generate a chirp signal may have a signal generator output 218 connected to an input of each of the variable gain RF transmitter amplifiers 208a, 208b, 208c which each have a respective output antenna terminal 210a, 210b and 210c for connecting to a respective antenna (not shown). The RF transmitter amplifiers 208a, 208b, 208c may be power amplifiers having a power output of in the range of 500 milliwatts to 3 watts dependent on the range to be covered. A transmitter controller 206 which may be implemented using logic hardware, or a combination of hardware and software may be connected to the gain control inputs of the respective amplifiers via a control bus 212. The output 218 of the signal generator may also be connected to a first input of a receiver mixer 216. A second input of the receiver mixer 216 may be coupled to an output of a receiver amplifier 214 which has an input 219 for connecting to a receive antenna (not shown). The output of the mixer 216 may be connected to a signal re-constructor 202. In operation the controller 206 may control the gains of the amplifiers 208a, 208b and 208c to output varying combinations of portions of the chirp signal generated by the signal generator 204. For example the gains may be switched between -1 or +1 corresponding to a polarity/ phase switch. Alternatively or in addition the gain may be switched between 0 and 1 corresponding to switching the respective amplifier on or off. The output signals from the amplifiers 208a, 208b, 208c may be transmitted via respective antennas (not shown) connected to amplifier outputs 210a, 210b, and 210c. A reflected signal from an object may be received via a receive antenna and amplified by the amplifier 214 which may be a low noise amplifier. The output of the amplifier 214 is mixed with the originally generated signal from the signal generator and the resulting output is received by the signal constructor 202. The signal constructor 202 converts the received analog signal to a digital signal. The signal constructor 202 may reconstruct the signal by comparing the measured samples with an expected result from a model as previously explained using equations 9 to 13. The reconstructed signal output from the signal constructor may then show one or more peak values indicating the location of respective objects with respect to the radar system 200.

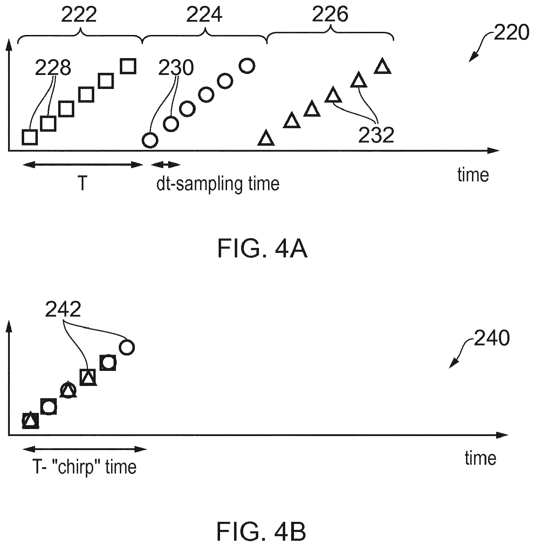

An example typical transmission of a radar system 220 during the transmission of a chirp signal is shown in figure 4A. In this example, during a chirp period T, there are six sample periods each of duration dt. The square symbols 228 indicate an output from a first amplifier in a particular sample period dt, the circles 230 indicate an output from a second amplifier during a particular sample period dt and the triangles 232 indicate an output from a third amplifier during a particular sample period dt. In a conventional MIMO system the chirp signal is transmitted from each amplifier via a respective antenna sequentially during time periods 222, 224 and 226 respectively, consequently in this example the location of the object is determined after a duration of 3T.

An example combination of antenna outputs used 240 during the transmission of a chirp signal by the radar system 200 is shown in figure 4B. In this example, six sample periods each of duration dt have varying combinations 242 of the output of the three amplifiers. The square symbols indicate an output from the first amplifier 208a in a particular sample period dt, the circles indicate an output from the second amplifier 208b during a particular sample period dt and the triangle indicate an output from the third amplifier 208c during a particular sample period dt. The radar system 200 may reconstruct a reflected signal with an equivalent angular resolution to the case illustrated in figure 4A in a single chirp time period T.

In addition to the above combination sequence, it will be appreciated that other combinations of antennas are also possible. In the general case, the gain of amplifier for each antenna (m) during each sample or measurement period (n) may be denoted as $c_{mn}$ The amplifier gain may be for example a gain switching between -1 and 1, or gain switching between 0 and 1. Now considering one sequence per antenna $c_{mn}$ (with n=1...N) and denoting as vector $\boldsymbol{c_m}$, then the M sequences $\boldsymbol{c_m}$ should have properties typical for good sequences used in spread spectrum communication. Assuming all antennas are equally important then the sequences may have one or more of the following properties:

- The frequency spectrum of each sequence $\boldsymbol{c_m}$ may be wide, ideally flat. For example $c_m$ may be sampled at T/N sample time intervals corresponding to time dt, and so the frequency spectrum of the signal may have energy in many or all parts of a frequency range between zero and the Nyquist frequency 1/(2T/N). If all sequences are chosen to include part of the spectrum then reconstruction of the full spectrum will not be possible. If one of the sequences is not wide spectrum then the information from that antenna will not be used optimally.
- The total power of the sequences should be similar, that is to say within 5% to equally use the information from all the antennas, that is to say the output should be balanced.
- The cross correlation between two sequences for two different antennas should be minimal. For example, the sequences may be orthogonal with cross correlation value of zero.
- Some examples of appropriate sequence generators are so-called "Gold codes" or Pseudo noise generated using shift registers. In other examples other spread spectrum code sequences may be used.

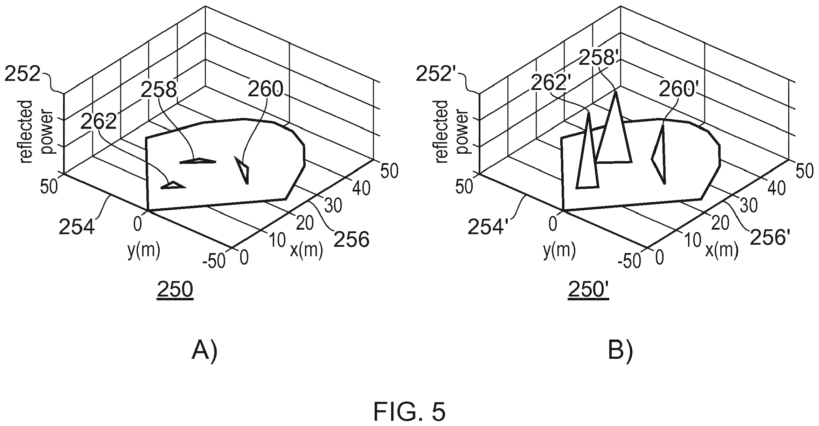

Figure 5A illustrates a matrix (A) 250 transformed to x, y two-dimensional positions with respect to an example FMCW MIMO radar system at the origin x=0, y=0. The x-axis 256 varies in meters between 0 and 50m. The y-axis 254 varies between -50 meters and +50 meters. The radar system in this example is an example of radar system 100 with M=8 transmitters, each transmitter coupled to a respective antenna and 1 receiver connected to a respective antenna. The reflected signals angle of arrival may vary in the range -pi/3 to pi/3 radians for each of the transmitters. The z-axis 252 shows the reflected power detected by the receiver 108. N = 256 samples are taken during each chirp period T. The combinations of the 8 transmitters using during the chirp are changed after a time T/256.

The result of the processing by the signal re-constructor shows objects with peaks at 258, 260, and 262.

Figure 5B indicates the response 250' of a MIMO system with conventional sequential transmission of a chirp signal from 8 antennas. The x-axis 256 varies between 0 and 50 meters. The y-axis 254 varies between -50 meters and +50 meters. The radar system in this example has M=8 transmitters coupled to a respective antenna and 1 receiver connected to a respective antenna. The reflected signals angle of arrival may vary in the range -pi/3 to pi/3 radians for each of the transmitters. The z-axis 252 shows the reflected power detected by the receiver 108. N = 256 samples are taken during each chirp period T. A single transmitter is used for each chirp period T and so the response shown in matrix 250' represents the results after a time 8T. The result of the processing using a conventional 2D Fourier transform shows objects with peaks at 258' and 260', and 262'.

It can be seen from a comparison of the peaks of graph 250 and 250' that the radar system 100 which transmits combinations of samples during a single chirp detects the object locations correctly and takes less time than the radar system with the response shown in 250'. The radar system 100 may detect objects with the same angular resolution as a typical MIMO radar. As only a single chirp for detection is used the peaks are lower than 250' since less energy is used in transmission but the detection speed is faster. If the transmitted energy is increased the peaks will become higher.

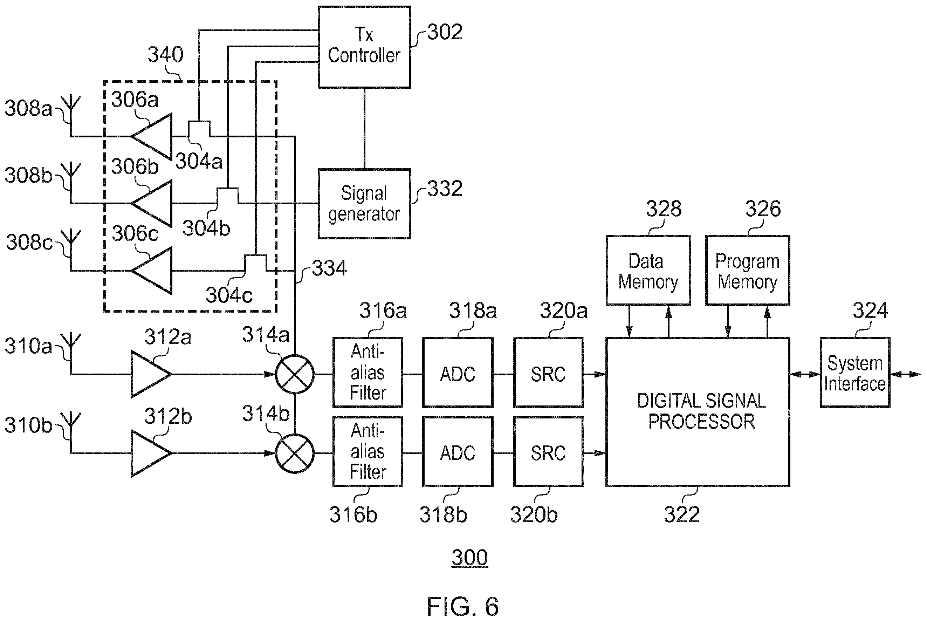

Figure 6 shows a radar system 300 with a transmitter module 340 including three transmitters each transmitter including a series arrangement of a transistor 304a, 304b, 304c and a respective amplifier 306a, 306b, 306c. The outputs of each of the RF amplifiers 306a, 306b and 306b are connected to a respective antenna 308a, 308b, and 308c. A transmitter controller 302 may have three control outputs, each control output connected to a respective gate of the transistors 304a, 304b, and 304c. The transmitter controller 302 may be connected to a signal generator 332. An output 334 of the signal generator 332 may be connected to each of the transistors 304 a, 304B, and 304C. The output 334 of the signal generator 332 may be connected to each of mixers 314A, 314B in the respective receiver chains. The radar system 300 includes two receiver chains. Each receiver chain consists of a series arrangement of an antenna 310a, 310b; an amplifier 312a, 312b; the mixers 314a, 314b; an anti-alias filter 316a, 316b; an analog to digital converter 318a, 318b; and a sample rate converter 320a, 320 b. The output from each of the sample rate converters 320a, 320b may be connected to a digital signal processor 322. The digital signal processor 322 may be connected to a data memory 328, and a program memory 326. The digital signal processor 322 may be connected to a system interface 324. The system interface may have an interface bus to communicate for example with a host processor (not shown). The program memory 326 may store a program to execute the signal reconstruction in accordance with equations 9 to 13. The digital signal processor 322, in combination with signal reconstruction software stored in the program memory 326 may implement the signal re-constructor. The data memory 328 may be partially used to store the range value matrix 180.

It will be appreciated that the transmitter controller 302 may be implemented using digital logic or a combination of digital logic and software running on a microprocessor such as a digital signal processor. The signal generator 332 may be implemented as a combination of digital and analogue circuitry to generator the analog chirp signal. The signal generator 332 may also be at least partially implemented in software executable on a microprocessor. The chirp signal may have a frequency range between 1 and 100 GHz. The frequency sweep of the chirp signal may include all frequencies between 1 and 100 GHz or a portion of the range. For car radar applications the frequencies between 77 and 81 GHz may typically be used, however, it will be appreciated that other example radar systems may use other frequency ranges.

In operation of the radar system 300, the transmit controller 302 may enable the signal generator 332 to generate a chirp signal on the output 334. The transmit controller 302 may control the combinations of the transmit antenna 308a, 308b, 308c which are used in a particular sample period during the single chirp period T. The reflected chirp signal may be received by each of the two respective receive chains via the antenna 310a, and 310b. Following mixing by the respective mixer 314a and 314b, the demodulated waveform may have a frequency of approximately 40MHz. This relatively low frequency signal contains the depth or distance information and the phase difference between the signal transmitted from each of the respective transmitter antennas 308a, 308b, 308c indicates the angle of arrival of the reflected signal. In addition the phase difference between the signal received by the first and second receiver chains may also indicate the angle of arrival. The signal re-constructer 330 may process the signal from the two receiver chains and determine a location of an object within a single chirp period according to equations 9 to 13 as previously described. The signal re-constructor 330 may combine processing according to equations 9 to 13 with the standard virtual antenna processing in accordance with equations 1 to 8 to effectively double the angular resolution within the time period of a single chirp. Some or all of the elements of the radar system 300 may be incorporated in a CMOS integrated circuit.

For an additional receive antenna at distance $\Delta_r$ the additional delay due to the angle can be approximated as $\tau(\theta, m, r) = 2\pi \frac{\Delta m + \Delta_r}{\lambda} \sin\theta$. For R receive antennas, models may generated similar to equations 2 and 3. The model fitting is then done for all received signals and becomes:

$$E^c(A) = \sum_{r=1}^{R} \sum_{n=0}^{N-1} (x_{r,n}^c - x_{r,n}^{c,model}(A))^2 \qquad (14)$$

The rest of the signal reconstruction is the same as previously described.

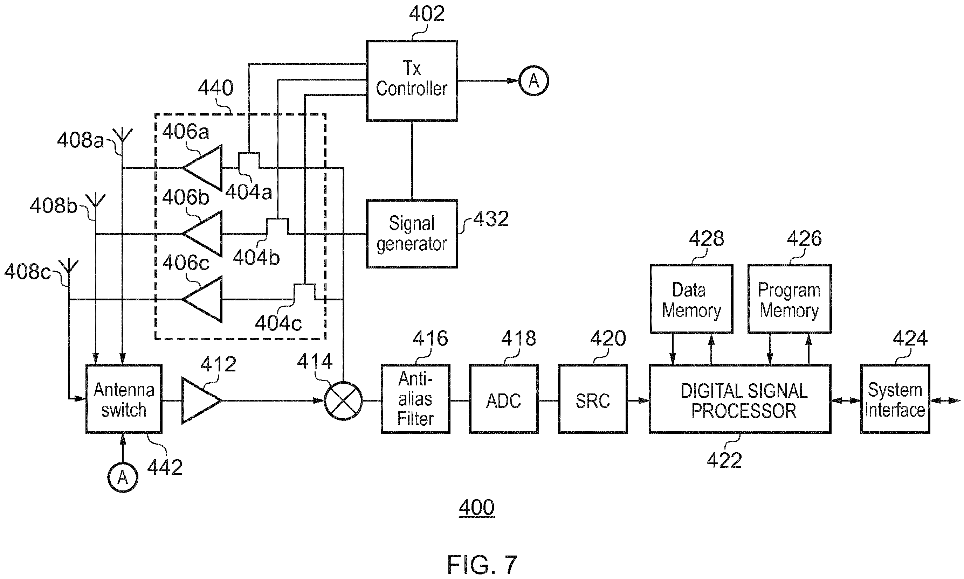

Figure 7 shows a radar system 400 with a transmitter module 440 including three transmitters each transmitter including a series arrangement of a transistor 404a, 404b, 404c and a respective amplifier 406a, 406b, 406c. The outputs of each of the amplifiers 406a, 406b and 406b are connected to a respective antenna 408a, 408b, 408c. The antennas 408a, 408b and 408c are connected to an antenna switch module 442. The antenna switch module 442 is connected to the controller via a control output denoted with the letter A on figure 7. The transmission controller 402 may have three further control outputs, each control output connected to a respective gate of the transistor 404a, 404b, and 404c. The transmission controller 402 may be connected to the signal generator 432. An output 434 of the signal generator 432 may be connected to each of the transistors 404a, 404b, and 404c. The output 434 of the signal generator 432 may be connected to the mixers 414 in the receiver chain. The radar system 400 includes one receiver chain including a series arrangement of an amplifier 412; a mixer 414; an anti-alias filter 416; an analog to digital converter 418; and a sample rate converter 420. An output from the antenna switch module 424 may be connected to an input of the amplifier 412. The output from the sample rate converter 420 may be connected to a digital signal processor 422. The digital signal processor 422 may be connected to a data memory 428, and a program memory 426. The digital signal processor 422 may be connected to a system interface 424. The system interface 424 may have an interface bus to communicate for example with a host processor (not shown). The program memory may store a program to execute the signal reconstruction in accordance with equations 9 to 13. The digital signal processor 422, in combination with signal reconstruction software stored in the program memory 426 may implement the signal re-constructor. The data memory 428 may be partially used to store the range value matrix 180.

It will be appreciated that the transmit controller 402 may be implemented using digital logic or a combination of digital logic and software running on a microprocessor such as a digital signal processor. The signal generator 432 may be implemented as a combination of digital and analogue circuitry to generator the analog chirp signal. The signal generator 332 may also be at least partially implemented in software executable on a microprocessor. The chirp signal may have a frequency range between 1 and 100 GHz. The frequency sweep of the chirp signal may include all frequencies between 1 and 79 GHz or a portion of the range. For car radar applications the frequencies between 77 and 81 GHz may typically be used, however, it will be appreciated that other example radar systems may use other frequency ranges.

In operation of the radar system 400, the transmit controller 402 may enable the signal generator 432 to generate a chirp signal on the output 434. The transmit controller 402 may control the combinations of the transmit antenna 408a, 408b, 408c which are used in a particular sample period during the single chirp period T. The transmit controller may control the antenna switch module 442 to use combinations of the transmit antenna 408a, 408b, and 408c for receiving when not used for transmitting. The reflected chirp signal may be received by each of the two respective receive chains via one or more of the antennas 408a, 408b and 408c. Following mixing by the respective mixer 414a and 414b, the demodulated waveform may have a relatively low frequency, for example a frequency of approximately 40MHz. This relatively low frequency signal typically contains the depth or distance information and the phase difference between the signal transmitted from each of the respective transmitter antennas 408a, 408b, 408c indicates the angle of arrival of the reflected signal. The signal re-constructer 430 may process the signal from the receiver chain and determine a location of an object within a single chirp period according to equations 9 to 13 as previously described.

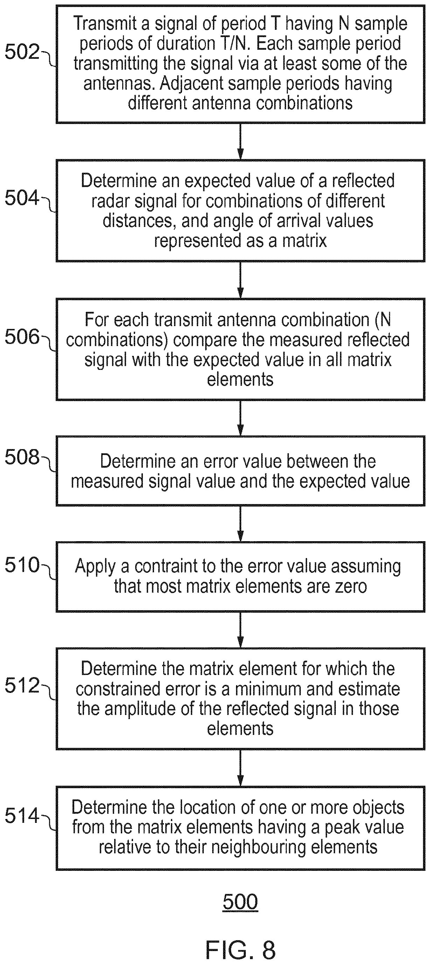

Figure 8 shows a method of determining the location of an object 500 in a radar system with multiple transmitters and at least one receiver. In step 502 a radar signal for example a chirp signal with a time period T may be transmitted. The time period T may consist of T/N sub-period or sample periods and in each of these sample periods a varying combination of antenna may be used to transmit the signal. Adjacent sample periods may use different combinations of the antennas.

In step 504 an expected value for each value of distance and angle of arrival may be determined from a model of the reflected signal received by a receiver. The expected value which may be represented as a range value matrix. As will be appreciated, the values of each matrix element may be stored in a memory to avoid recalculating the expected values for each element. In step 506, for each of the N sample periods having duration T/N, the reflected signal may be compared with the expected values in the matrix elements. In step 508 an error between the measured signal value and the expected value is determined. In step 510 a constraint may be applied to the error term which assumes that most matrix element values are zero. This may be for example the regularization function described in equations 9 to 13.

In step 512 the matrix element for which the constrained error is a minimum may be determined and the amplitude of the reflected signal for those matrix elements may be determined.

In step 514, the location of one or more objects may be determined from one or more peak values determined from a comparison of the matrix element values with respect to their neighbouring matrix elements. This may be considered a localized peak value which indicates the location of an object. As will be appreciated the radar system may detect multiple reflection from multiple objects.

The method 500 allows the location of an object to be determined in a radar system with M transmitting antenna using a single chirp signal period T having N sample periods of time T/N with N measurements compared to MN measurements in a typical system. The MIMO system implementing the method 500 may reduce the object detection time and so may detect faster moving objects.

A radar system for a motor vehicle is describe including a plurality (M) of transmitters for transmitting a radar signal, a receiver for receiving the transmitted radar signal reflected by an object, a signal re-constructor coupled to the receiver. Each transmitter is configured to transmit at least part of a frequency modulated continuous wave signal during a time period T having N sample time periods of duration T/N, and in each of the N sample time periods combinations of at least some of the transmitters transmit. The signal re-constructor is configured to determine the coordinates of an object with respect to the radar system from N measurements of the received frequency modulated continuous wave signal, each of the N measurements being made for a time period of T/N. The radar system may reduce the detection time for objects while maintaining the angular resolution.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

The scope of the invention is defined in the appended claims. Any reference to "embodiment(s)", "example(s)", "scope(s)" or "aspect (s) of the invention" in this description not falling under the scope of the claims should be interpreted as illustrative example(s) for understanding the invention.

**Claims**

1. A radar system (100, 200) for a motor vehicle comprising:

   a plurality (M) of transmitters (202a, 202b) for transmitting a radar signal comprising a continuous wave signal,
   a receiver (214) for receiving the transmitted radar signal reflected by an object,
   a signal re-constructor (202) coupled to the receiver,
   wherein each transmitter is configured to transmit at least part of the continuous wave signal during a time period (T)
   and for each of a number of sample time periods (N) during the time period (T) combinations of at least some of the transmitters transmit,
   the signal re-constructor is configured to determine the coordinates of an object with respect to the radar system from a number (N) of measurements of the received continuous wave signal equal to the number of sample time periods, **characterised in that** the radar system further comprises
   a signal generator (204) coupled to the plurality of transmitters, the signal generator being configured to generate a continuous wave signal comprising a frequency modulated continuous wave chirp signal which repeats after the time period (T),
   a transmit controller coupled to each of the transmitters wherein the transmit controller (206) is operable to route the continuous wave signal to at least one of the transmitters during each of the (N) sample time periods, and
   wherein the transmit controller is configured to vary the combinations of transmitters used to transmit during the time period (T) in at least one of a pseudo-random sequence, and a Gold code sequence.

2. The radar system of claim 1 wherein the received radar signal is processed by the signal re-constructor as a sparse signal.

3. The radar system of claim 2 wherein the signal re-constructor is configured to generate an estimate of the expected signal value of the received signal for each of a plurality of distances between an object and the radar system and an angle of arrival of the received signal and to compare the measured signal value with the expected signal value for each combination of the distances and angles of arrival.

4. The radar system of claim 3 wherein the signal re-constructor is further configured to determine the most likely location of an object by determining a minimum difference between the expected value and the received signal value for each combination of the distance and angle of arrival.

5. The radar system of any of claims 3 or 4 further comprising an antenna switch module (340) coupled to the controller wherein the controller is operable to couple an antenna to the receiver when not in use by a transmitter.

6. An automatic driver assistance system comprising the radar system of any preceding claim.

7. An integrated circuit comprising the radar system of any of claims 1 to 5.

8. A method (500) of determining the coordinates of an object in a radar system (200) comprising a plurality (M) of transmitters and a receiver, the method comprising

   transmitting at least part of a continuous wave signal during a time period (T) by varying the combinations of the transmitters (202a, 202b) used to transmit the signal a number (N) of sample times during the time period (T), receiving the transmitted frequency modulated continuous wave signal reflected from an object, and determining a distance and angle of the object with respect to the radar system from a number (N) of measurements equal to the number of sample times, **characterised in that** the method further comprises:

generating a continuous wave signal comprising a frequency modulated continuous wave chirp signal which repeats after the time period (T),

routing the continuous wave signal to at least one of the transmitters during each of the (N) sample time periods, and

varying the combinations of transmitters (202a, 202b) used to transmit during the time period (T) in at least one of a pseudo-random sequence, and a Gold code sequence.

9. The method of claim 8 wherein the continuous wave signal comprises a frequency modulated continuous wave chirp signal of a duration equal to or less than the time period

10. The method of claim 8 or 9 wherein determining the distance and angle of the object further comprises summing values of the received signal strength for each element of a matrix, each matrix element representing a signal strength value for a particular angle of arrival value and range value.

11. The method of claim 10 wherein determining the distance and angle of the object comprises assuming that the majority of elements in the matrix are zero.

12. The method of any of claims 8 to 11 wherein determining the distance and angle of an object further comprises:

generating an estimate (504) of the expected signal value of the received signal reflected from an object over a combination of a range of distances and angles of arrival

comparing the measured signal value (506) with the expected signal value for each combination of the distance and angles of arrival.

## Patentansprüche

1. Ein Radarsystem (100, 200) für ein Kraftfahrzeug, aufweisend:

eine Mehrzahl (M) von Sendern (202a, 202b) zum Senden von einem Radarsignal, welches aufweist ein kontinuierliches Wellensignal,

einen Empfänger (214) zum Empfangen von dem gesendeten Radarsignal, welches reflektiert wird von einem Objekt,

einen Signalwiederhersteller (202), welcher gekoppelt ist zu dem Empfänger,

wobei jeder Sender konfiguriert ist zum Senden von zumindest einem Teil von dem kontinuierlichen Wellensignal während einer Zeitspanne (T) und für jeden von einer Anzahl von Probe Zeiträumen (N) während der Zeitspanne (T) Kombinationen von zumindest einigen von den Sendern gesendet werden,

wobei der Signalwiederhersteller konfiguriert ist zum Bestimmen von den Koordinaten von einem Objekt in Bezug auf das Radarsystem von einer Anzahl (N) von Messungen von dem empfangenen kontinuierlichen Wellensignal, welche gleich ist zu der Anzahl von Probe Zeiträumen,

**dadurch gekennzeichnet, dass** das Radarsystem ferner aufweist:

einen Signalgenerator (204), welcher gekoppelt ist zu der Mehrzahl von Sendern, wobei der Signalgenerator konfiguriert ist zum Generieren eines kontinuierlichen Wellensignals aufweisend ein frequenzmoduliertes kontinuierliches Wellen Chirp Signal, welches sich wiederholt nach der Zeitspanne (T),

einen Sendekontroller, welcher gekoppelt ist zu jedem von den Sendern,

wobei der Sendekontroller (206) betriebsfähig ist zum Weiterleiten des kontinuierlichen Signals zu zumindest einem von den Sendern während jedem von den (N) Probe Zeiträumen, und

wobei der Sendekontroller konfiguriert ist zum Variieren der Kombinationen von Sendern, welche verwendet werden zum Senden, während der Zeitspanne (T) in zumindest einer von einer pseudo-zufälligen Sequenz und einer Gold Folgen Sequenz.

2. Das Radarsystem gemäß Anspruch 1,
wobei das empfangene Radarsignal verarbeitet wird mittels des Signal Wiederherstellers als ein spärliches Signal.

3. Das Radarsystem gemäß Anspruch 2,
wobei der Signalwiederhersteller konfiguriert ist zum Generieren von einer Schätzung von einem erwarteten Signalwert von dem empfangenen Signal für jede von einer Mehrzahl von Distanzen zwischen einem Objekt und dem Radarsystem und einem Einfallswinkel von dem empfangenen Signal und zum Vergleichen der gemessenen Signalwerte mit dem erwarteten Signalwert für jede Kombination von den Distanzen und Einfallswinkeln.

4. Das Radarsystem gemäß Anspruch 3,
wobei der Signalwiederhersteller ferner konfiguriert ist zum Bestimmen der höchstwahrscheinlichen Lage von einem Objekt durch Bestimmen einer Minimumdifferenz zwischen dem erwarteten Wert und dem empfangenen Signalwert für jede Kombination von der Distanz und dem Einfallswinkel.

5. Das Radarsystem gemäß irgendeinem der Ansprüche 3 oder 4, ferner aufweisend
ein Antennen Schaltermodul (340), welches gekoppelt ist zu dem Sendekontroller,
wobei der Sendekontroller betriebsfähig ist zum Koppeln einer Antenne zu dem Empfänger, wenn diese nicht in Verwendung ist durch einen Sender.

6. Ein automatisches Fahrerassistenzsystem aufweisend das Radarsystem gemäß irgendeinem vorherigen Anspruch.

7. Ein integrierter Schaltkreis aufweisend das Radarsystem gemäß irgendeinem der Ansprüche 1 bis 5.

8. Ein Verfahren (500) zum Bestimmen von den Koordinaten von einem Objekt mittels eines Radarsystems (200), welches aufweist eine Mehrzahl (M) von Sendern und einen Empfänger, das Verfahren aufweisend

Senden von zumindest einem Teil von einem kontinuierlichen Wellensignal während einer Zeitspanne (T) durch Variieren von den Kombinationen von den Sendern (202a, 202b), welche verwendet werden zum Senden des Signals von einer Anzahl (N) von Probe Zeiträumen während der Zeitspanne (T),
Empfangen von dem gesendeten frequenzmodulierten kontinuierlichen Wellensignal, welches reflektiert wird von einem Objekt, und
Bestimmen einer Distanz und eines Winkels von dem Objekt in Bezug auf das Radarsystem von einer Anzahl (N) von Messungen, welche gleich ist zu der Anzahl von Probe Zeiträumen,

**dadurch gekennzeichnet, dass** das Verfahren ferner aufweist:

Generieren eines kontinuierlichen Wellensignals aufweisend ein frequenzmoduliertes kontinuierliches Wellen Chirp Signal, welches sich wiederholt nach der Zeitspanne (T),
Weiterleiten des kontinuierlichen Wellensignals zu zumindest einem von den Sendern während jedem von den (N) Probe Zeiträumen, und
Variieren der Kombinationen von Sendern (202a, 202b), welche verwendet werden zum Senden, während der Zeitspanne (T) in zumindest einer von einer pseudo-zufälligen Sequenz und einer Gold Folge Sequenz.

9. Das Verfahren gemäß Anspruch 8,
wobei das kontinuierliche Wellensignal aufweist ein frequenzmoduliertes kontinuierliches Wellen Chirp Signal von einer Zeitdauer, welche gleich ist zu oder geringer ist als die Zeitspanne.

10. Das Verfahren gemäß Anspruch 8 oder 9,
wobei Bestimmen der Distanz und des Winkels von dem Objekt ferner aufweist
Summieren von Werten von der empfangen Signalstärke für jedes Element von einer Matrix,
wobei jedes Matrixelement repräsentiert einen Signalstärke Wert für einen besonderen Einfallswinkelwert und Reichweitewert.

11. Das Verfahren gemäß Anspruch 10,
wobei Bestimmen der Distanz und des Winkels von dem Objekt aufweist Annehmen, dass die Mehrheit von Elementen in der Matrix Null ist.

12. Das Verfahren gemäß irgendeinem der Ansprüche 8 bis 11,
wobei Bestimmen der Distanz und des Winkels von einem Objekt ferner aufweist:

Generieren von einer Schätzung (504) von einem erwarteten Signalwert von dem empfangenen Signal, welches reflektiert wird von einem Objekt, über eine Kombination von einem Bereich von Distanzen und Einfallswinkeln, Vergleichen der gemessenen Signalwerte (506) mit dem erwarteten Signalwert für jede Kombination von der Distanz und den Einfallswinkeln.

## Revendications

1. Système radar (100, 200) pour un véhicule motorisé, comprenant :

   une pluralité (M) d'émetteurs (202a, 202b) pour émettre un signal radar comprenant un signal en ondes entretenues,
   un récepteur (214) pour recevoir le signal radar émis réfléchi par un objet,
   un reconstructeur de signal (202) couplé au récepteur,
   chaque émetteur étant configuré pour émettre au moins une partie du signal en ondes entretenues au cours d'une période de temps (T)
   et, pour chacune d'un nombre (N) de périodes de temps d'échantillonnage au cours de la période de temps (T), des combinaisons d'au moins certains des émetteurs émettant,
   le reconstructeur de signal étant configuré pour déterminer les coordonnées d'un objet par rapport au système radar à partir d'un nombre (N) de mesures du signal en ondes entretenues reçu égal au nombre de périodes de temps d'échantillonnage, le système radar étant **caractérisé en ce qu'**il comprend en outre
   un générateur de signal (204) couplé à la pluralité d'émetteurs, le générateur de signal étant configuré pour générer un signal en ondes entretenues comprenant un signal chirp en ondes entretenues modulé en fréquence qui se répète après la période de temps (T),
   une unité de commande d'émission couplée à chacun des émetteurs, l'unité de commande d'émission (206) ayant pour fonction d'acheminer le signal en ondes entretenues vers au moins un des émetteurs au cours de chacune des (N) périodes de temps d'échantillonnage, et l'unité de commande d'émission étant configurée pour varier les combinaisons d'émetteurs utilisés pour émettre au cours de la période de temps (T) selon une séquence pseudo-aléatoire et/ou une séquence de code Gold.

2. Système radar selon la revendication 1, dans lequel le signal radar reçu est traité par le reconstructeur de signal comme un signal parcimonieux.

3. Système radar selon la revendication 2, dans lequel le reconstructeur de signal est configuré pour générer une estimation de la valeur de signal attendue du signal reçu pour chacune d'une pluralité de distances entre un objet et le système radar et un angle d'arrivée du signal reçu et pour comparer la valeur de signal mesurée à la valeur de signal attendue pour chacun combinaison des distances et des angles d'arrivée.

4. Système radar selon la revendication 3, dans lequel le reconstructeur de signal est configuré en outre pour déterminer l'emplacement le plus vraisemblable d'un objet en déterminant une différence minimale entre la valeur attendue et la valeur de signal reçu pour chaque combinaison de la distance et de l'angle d'arrivée.

5. Système radar selon les revendications 3 ou 4, comprenant en outre un module commutateur d'antenne (340) couplé à l'unité de commande, l'unité de commande ayant pour fonction de coupler une antenne au récepteur lorsqu'elle n'est pas utilisée par un émetteur.

6. Système d'aide à la conduite automatique, comprenant le système radar selon l'une quelconque des revendications précédentes.

7. Circuit intégré, comprenant le système radar selon l'une quelconque des revendications 1 à 5.

8. Procédé (500) de détermination des coordonnées d'un objet dans un système radar (200) comprenant une pluralité (M) d'émetteurs et un récepteur, le procédé comprenant
   l'émission d'au moins une partie d'un signal en ondes entretenues au cours d'une période de temps (T) par variation des combinaisons des émetteurs (202a, 202b) utilisés pour émettre le signal un nombre (N) de temps d'échantillonnage au cours de la période de temps (T),
   la réception du signal en ondes entretenues modulé en fréquence émis réfléchi depuis un objet, et la détermination d'une distance et d'un angle de l'objet par rapport au système radar à partir d'un nombre (N) de mesures égal au nombre de temps d'échantillonnage, le procédé étant **caractérisé en ce qu'**il comprend en outre :

la génération d'un signal en ondes entretenues comprenant un signal chirp en ondes entretenues modulé en fréquence qui se répète après la période de temps (T),
l'acheminement du signal en ondes entretenues vers au moins un des émetteurs au cours de chacune des (N) périodes de temps d'échantillonnage, et
la variation des combinaisons d'émetteurs (202a, 202b) utilisés pour émettre au cours de la période de temps (T) selon une séquence pseudo-aléatoire et/ou une séquence de code Gold.

9.  Procédé selon la revendication 8, dans lequel le signal en ondes entretenues comprend un signal chirp en ondes entretenues modulé en fréquence d'une durée inférieure ou égale à la période de temps.

10. Procédé selon la revendication 8 ou 9, dans lequel la détermination de la distance et de l'angle de l'objet comprend en outre la sommation de valeurs de l'intensité de signal reçu pour chaque élément d'une matrice, chaque élément de la matrice représentant une valeur d'intensité de signal pour une valeur particulière d'angle d'arrivée et une valeur particulière de portée.

11. Procédé selon la revendication 10, dans lequel la détermination de la distance et de l'angle de l'objet comprend l'hypothèse faite que la majorité des éléments dans la matrice sont nuls.

12. Procédé selon l'une quelconque des revendications 8 à 11, dans lequel la détermination de la distance et de l'angle d'un objet comprend en outre :

la génération d'une estimation (504) de la valeur de signal attendue du signal reçu réfléchi depuis un objet sur une combinaison d'une plage de distances et d'angles d'arrivée,
la comparaison de la valeur de signal mesurée (506) à la valeur de signal attendue pour chaque combinaison des distances et des angles d'arrivée.

FIG. 1

FIG. 2A

FIG. 2B

FIG. 2C

FIG. 2D

FIG. 3

FIG. 4A

FIG. 4B

FIG. 5

EP 3 211 445 B1

FIG. 6

300

FIG. 7

400

EP 3 211 445 B1

502 — Transmit a signal of period T having N sample periods of duration T/N. Each sample period transmitting the signal via at least some of the antennas. Adjacent sample periods having different antenna combinations

504 — Determine an expected value of a reflected radar signal for combinations of different distances, and angle of arrival values represented as a matrix

506 — For each transmit antenna combination (N combinations) compare the measured reflected signal with the expected value in all matrix elements

508 — Determine an error value between the measured signal value and the expected value

510 — Apply a contraint to the error value assuming that most matrix elements are zero

512 — Determine the matrix element for which the constrained error is a minimum and estimate the amplitude of the reflected signal in those elements

514 — Determine the location of one or more objects from the matrix elements having a peak value relative to their neighbouring elements

500

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140247181 A1
- US 2009222226 A1
- US 2015055688 A1
- US 2007152871 A1